# EUROPÄISCHE PATENTSCHRIFT

(11) **EP 1 196 699 B1**
(45) Veröffentlichungstag und Bekanntmachung des Hinweises auf die Patenterteilung: **12.02.2003**
(21) Anmeldenummer: 00953048.6
(22) Anmeldetag: 14.07.2000
(51) Int. Cl.: F16H 47/04, F16H 57/00

(54) **LEISTUNGSVERZWEIGUNGSGETRIEBE**
POWER DISTRIBUTION TRANSMISSION
TRANSMISSION DE DERIVATION DE PUISSANCE

(30) Priorität: 20.07.1999 DE 19933822
(43) Veröffentlichungstag der Anmeldung: 17.04.2002
(73) Patentinhaber: ZF FRIEDRICHSHAFEN Aktiengesellschaft, 88038 Friedrichshafen (DE)
(72) Erfinder: HILDEBRAND, Martin, D-88048 Friedrichshafen (DE); ZENTSCH, Rudolf, D-88045 Friedrichshafen (DE)
(86) Internationale Anmeldenummer: EP0006744
(87) Internationale Veröffentlichungsnummer: WO01006150

(56) Entgegenhaltungen:
- EP-A- 0 702 168
- EP-B- 0 491 903
- DE-A- 4 401 509
- DE-A- 19 522 833
- US-A- 5 295 414

## Beschreibung

Die Erfindung betrifft ein Leistungsverzweigungsgetriebe nach der im Oberbegriff von Anspruch 1 näher definierten Art.

Leistungsverzweigungsgetriebe, insbesondere als stufenlose Getriebe, werden häufig zum Antrieb von Kraftfahrzeugen, insbesondere Ackerschleppern, verwendet. Hierbei sind besonders Leistungsverzweigungsgetriebe mit einem mechanischen Leistungszweig und einem hydraulischen Leistungszweig, bestehend aus einer hydraulischen Pumpe und einem hydraulischen Motor, vorzugsweise mit einer in ihrem Hubvolumen verstellbaren Pumpe, geeignet. Da beim Betrieb des Leistungsverzweigungsgetriebes vor allem der hydraulische Leistungszweig starke Schwingungen erzeugt, welche bei fester Verbindung des hydraulischen Motors und der hydraulischen Pumpe mit dem Getriebegehäuse diese Schwingungen an das Getriebegehäuse weitergibt und dabei starkes Geräusch verursacht wird, ist die hydraulische Pumpe und der hydraulische Motor vom Getriebegehäuse zu entkoppeln.

Die DE 44 01 509 A1 offenbart ein stufenloses Getriebe mit Leistungsverzweigung, insbesondere für Kraftfahrzeuge, welches aus einem hydraulischen Leistungszweig und einem mechanischen Leistungszweig besteht, wobei beim hydraulischen Leistungszweig eine hydraulische Pumpe und ein hydraulischer Motor miteinander verbunden sind, und um den hydraulischen Motor und die hydraulische Pumpe vom Getriebegehäuse zu entkoppeln, diese sind über Dämpfungselemente im Getriebegehäuse gehaltert. Es sind jeweils Dämpfungselemente an jeder Seite der hydraulischen Motor-Pumpe-Einheit angebracht, über welche die Kräfte in das Getriebegehäuse übertragen werden können. Hierbei ist die Aufhängung so gestaltet, daß eine Drei-Punkt-Lagerung geschaffen wird, die jeweils auf der Eingangs- und Ausgangsseite des stufenlosen Wandlers, bestehend aus der hydraulischen Pumpe und dem hydraulischen Motor, als Zentrallager zur Lagefixierung der Mittelachse des stufenlosen Wandlers gegenüber dem Getriebegehäuse und ein drittes Lager als Stützlager zur Drehmomentabstützung und gegebenenfalls axialen Abstützung des stufenlosen Wandlers angebracht ist, und daß die Zentrallager so ausgebildet sind, daß eine Verdrehung des stufenlosen Wandlers um seine Zentralachse gegen das Drehmomentstützlager möglich ist. Um den hydraulischen Motor und das hydraulische Getriebe mit diesen Dämpfungseinrichtungen im Getriebegehäuse montieren zu können, muß das Getriebe ein geteiltes Getriebegehäuse aufweisen, um den hydraulischen Motor und die hydraulische Pumpe in dem Getriebegehäuse einbauen zu können. Treten Fertigungstoleranzen auf, besteht bei dieser Anordnung die Möglichkeit, daß der hydraulische Motor und die hydraulische Pumpe schräg in dem Getriebegehäuse eingebaut werden können, wodurch beim Betrieb des Leistungsverzweigungsgetriebes die Dämpfungselemente in ihrer Ausgangsposition schon zusammengepreßt sind, wodurch die Geräuschdämpfung erheblich eingeschränkt ist. Da bei diesem Getriebe die Antriebsräder zum Antrieb der hydraulischen Pumpe und die Antriebsräder am hydraulischen Motor fest mit den Wellen der hydraulischen Pumpe und des hydraulischen Motors verbunden sind, werden Schwingungen und somit Bewegungen direkt auf die Laufverzahnung in den mechanischen Leistungszweig übertragen, wodurch sich die Eingriffsgeometrie der Laufverzahnung ständig ändert.

In der DE 195 22 833 A und US 5 295 414 A werden ähnliche Getriebe beschrieben. Sie Offenbaren ein Leistungsverzweigungsgetriebe gemäß dem Oberbegriff des Anspruchs 1.

Der vorliegenden Erfindung liegt die Aufgabe zugrunde, ein Leistungsverzweigungsgetriebe mit einem hydraulischen und einem mechanischen Leistungszweig zu schaffen, bei welchem die Schwingungen des hydraulischen Leistungszweigs nur gedämpft an die den hydraulischen Leistungszweig umgebenden Teile abgegeben werden und sich der hydraulische Leistungszweig durch eine einfache Montage im Getriebegehäuse auszeichnet.

Die Aufgabe wird mit einem, auch die kennzeichnenden Merkmale des Hauptanspruchs aufweisenden, gattungsgemäßen Leistungsverzweigungsgetriebe gelöst.

Der hydraulische Leistungszweig besteht aus einer hydraulischen Pumpe und einem hydraulischen Motor, welche miteinander verbunden sind und im Bereich der Verbindung des hydraulischen Motors und der hydraulischen Pumpe über Dämpfungselemente mit dem Getriebegehäuse verbunden sind. Vorzugsweise ist der hydraulische Motor und die hydraulische Pumpe über eine Zwischenplatte miteinander verbunden, welche sternförmig zur Rotationsachse der hydraulischen Pumpe Aufnahmen für die Dämpfungselemente aufweist, über welche die Zwischenplatte mit dem Getriebegehäuse verbunden werden kann. Es ist jedoch auch möglich, die Dämpfungselemente in Aufnahmen des Getriebegehäuses anzuordnen und mit der Zwischenplatte zu verbinden. Die Zwischenplatte kann auch einstückig mit dem Gehäuse des hydraulischen Motors oder dem Gehäuse der hydraulischen Pumpe ausgeführt sein. Indem die hydraulische Pumpe und der hydraulische Motor an ihrer Verbindungsstelle mit in einer Ebene liegenden Dämpfungselementen gedämpft im Getriebegehäuse gelagert sind, wird die hydraulische Pumpe- MotorEinheit im Bereich ihres Schwerpunkts gehaltert und kann sich in allen drei Achsenebenen frei gegen die Elastizität der Dämpfungselemente bewegen. Eine Trennung des Getriebegehäuses ist nicht erforderlich, da die Zwischenplatte über Befestigungselemente, vorzugsweise eine Schraubverbindung, von einer Seite der Pumpe-Motor-Einheit in das Getriebegehäuse montiert werden kann. Die Pumpe-Motor-Einheit ist somit nur in einer Getriebegehäusehälfte zu befestigen. Vorzugsweise weist das Getriebegehäuse Aufnahmen für Zentrierstifte auf, mit welchen bei der Montage die hydraulische Pumpe und der hydraulische Motor in dem Getriebegehäuse zentriert und anschließend über die Dämpfungselemente mit dem Getriebegehäuse verbunden werden. Nach Befestigung der hydraulischen Pumpe und des hydraulischen Motors über die Dämpfungselemente im Getriebegehäuse können die Zentrierstifte wieder entfernt werden. Hierdurch ist eine einfache Montage gewährleistet, bei welcher die hydraulische Pumpe und der hydraulische Motor auch bei vorhandenen Fertigungstoleranzen in der Position montiert werden können, in welcher die hydraulische Motor-Pumpen-Einheit die geforderte Einbaulage erreicht. Die Antriebs- bzw. Abtriebswellen der hydraulischen Pumpe und des hydraulischen Motors sind über Wellen mit den Zahnrädern, welche mit dem mechanischen Leistungszweig in Verbindung stehen, verbunden, welche fliegend einerseits in den Wellen der hydraulischen Pumpe oder des hydraulischen Motors und andererseits in Zahnrädern, welche mit dem mechanischen Leistungszweig in Verbindung stehen, gelagert sind. Erfindungsgemäß weisen die Wellen jeweils an ihren Verbindungen mit den Zahnrädern und der hydraulischen Pumpe bzw. des hydraulischen Motors eine ballige Verzahnung bzw. eine als Bogenverzahnung ausgeführte Mitnahmeverzahnung auf, mit welcher, in Verbindung mit der fliegenden Lagerung der Welle, Schiefstellungen bzw. Bewegungen der hydraulischen Pumpe und des hydraulischen Motors ausgeglichen werden können. Die Zahnräder, welche die Welle zur Verbindung mit dem hydraulischen Motor oder der hydraulischen Pumpe aufnehmen, sind im Getriebegehäuse gelagert, so daß die Bewegungen der hydraulischen Pumpe oder des hydraulischen Motors nicht auf die Laufverzahnung dieser Zahnräder übertragen werden kann. Hierdurch ist gewährleistet, daß die Laufverzahnung beim Betrieb immer die gleiche Eingriffsgeometrie aufweist. Da eine ballige Verzahnung bzw. Bogenverzahnung eine kleinere Kontaktfläche als eine gerade Verzahnung aufweist, wird der Körperschall in einem geringeren Maße übertragen als bei einer Standard-Zahnwellenverbindung. Somit ist der hydraulische Leistungszweig einerseits über die Dämpfungselemente im Schwerpunkt des hydraulischen Motors in einer Ebene schwingungsgedämpft im Getriebegehäuse gelagert, wodurch ein optimaler Freiheitsgrad und eine einfache Montage erreicht wird, und andererseits über Wellen, welche ballige Verzahnungen aufweisen, mit dem mechanischen Leistungszweig verbunden, wodurch ebenfalls eine Reduktion des Körperschalls erreicht wird.

Weitere Merkmale sind den Figuren-Beschreibungen zu entnehmen.
Es zeigen:

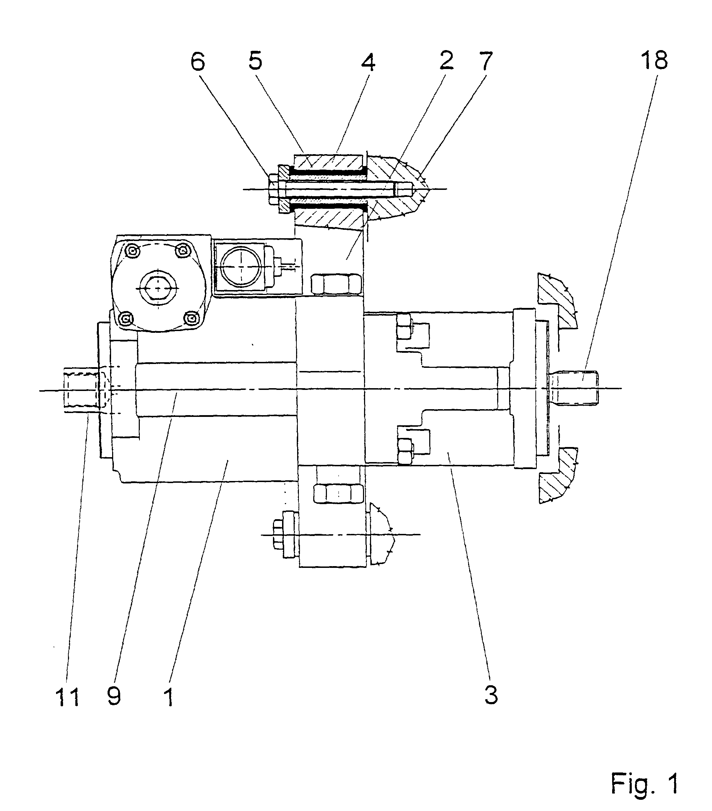

- Fig. 1: eine gedämpfte Aufhängung der hydraulischen Pumpe und des hydraulischen Motors;

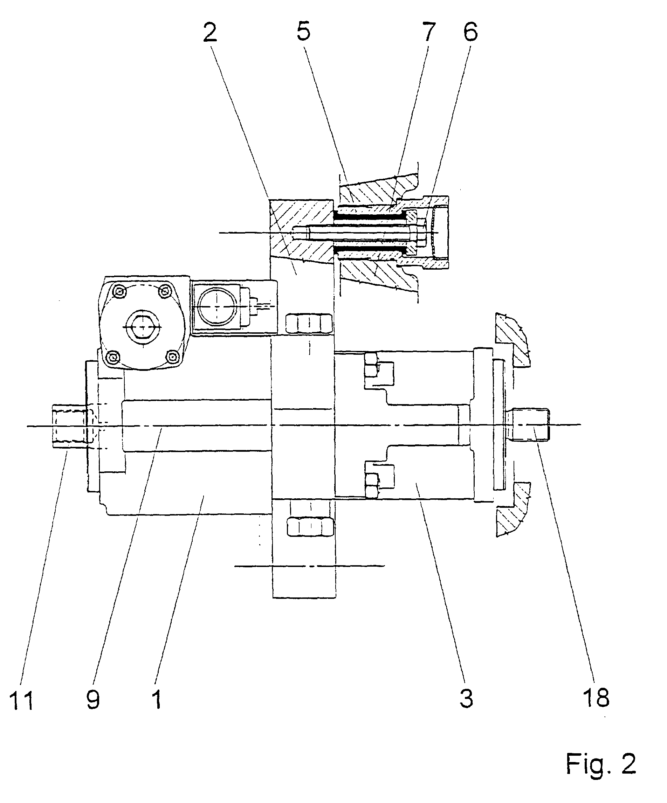

- Fig. 2: eine gedämpfe Aufhängung der hydraulischen Pumpe und des hydraulischen Motors;

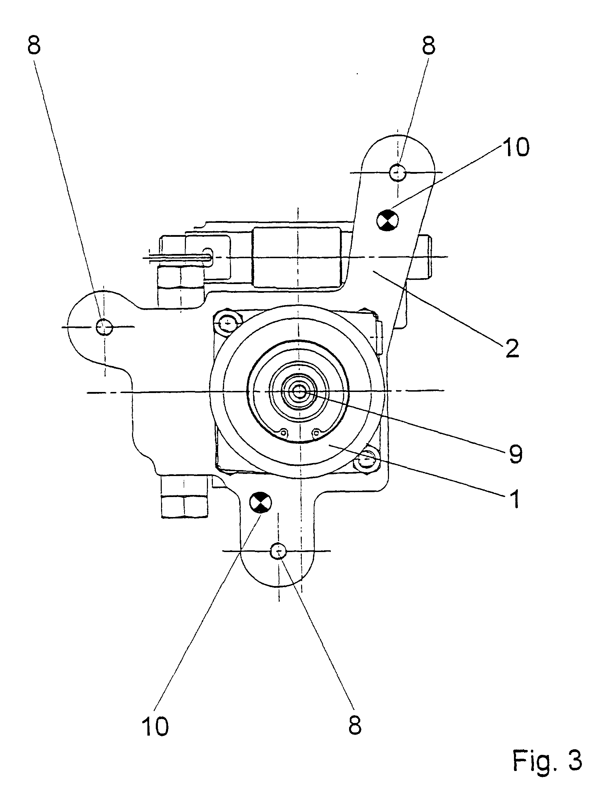

- Fig. 3: eine Seiten-Ansicht der hydraulischen Pumpe und des hydraulischen Motors und

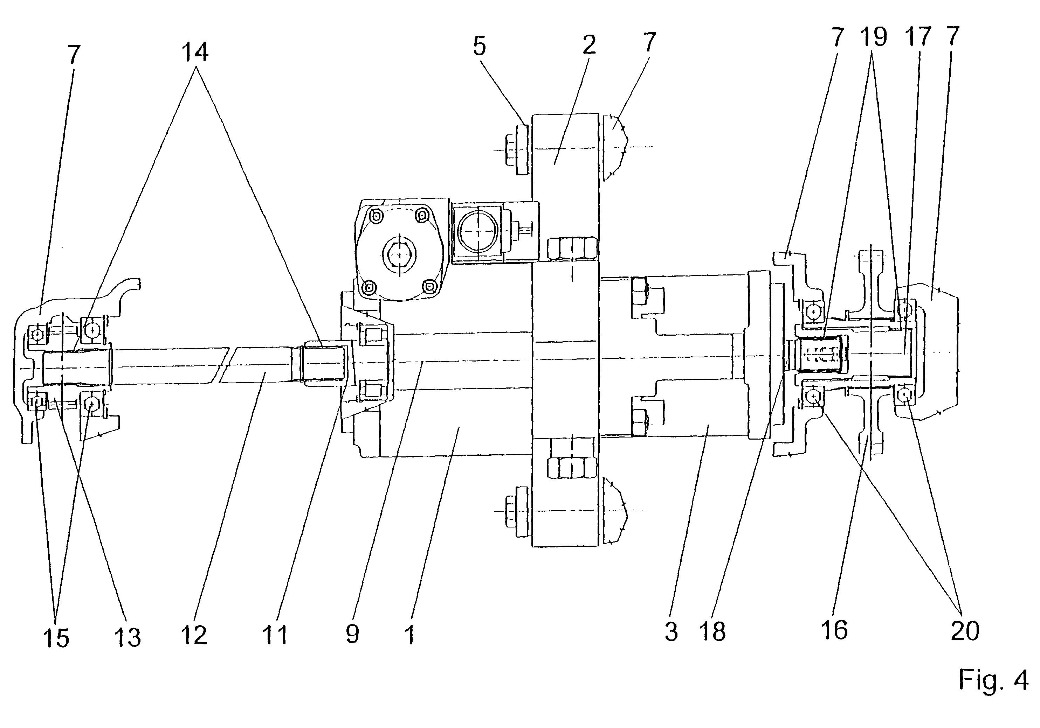

- Fig. 4: die Verbindung des hydraulischen Motors und der hydraulischen Pumpe mit Zahnrädern, welche mit dem mechanischen Leistungszweig in Verbindung stehen.

### Fig. 1:

Eine hydraulische Pumpe 1 ist über eine Zwischenplatte 2 mit einem hydraulischen Motor 3 verbunden und bildet den hydraulischen Leistungszweig eines Leistungsverzweigungsgetriebes. Die Zwischenplatte 2 weist Aufnahmen 4 auf, in welchen Dämpfungselemente 5 angeordnet sind, welche über Verbindungselemente 6 mit dem Getriebegehäuse 7 verbunden sind. Die Dämpfungselemente 5 sind so gestaltet, daß die Zwischenplatte 2 keinen direkten Kontakt zum Getriebegehäuse 7 hat und sich die Zwischenplatte 2 gegen die Elastizität der Dämpfungselemente 5 in allen drei Achsen frei bewegen kann. Die Verbindungselemente 6, welche hier als Schrauben dargestellt sind, sind alle auf der gleichen Seite angeordnet und somit bei der Montage gut zugänglich. Außer Schraubelemente sind auch noch weitere Verbindungselemente, wie z. B. Paßstifte oder Sprengringe, denkbar.

### Fig. 2:

Eine hydraulische Pumpe 1 ist über eine Zwischenplatte 2 mit dem hydraulischen Motor 3 verbunden, wobei die Zwischenplatte 2 über Dämpfungselemente 5 mit dem Getriebegehäuse 7 drehfest verbunden ist. Die Dämpfungselemente 5 befinden sich innerhalb des Getriebegehäuses 7 und sind zur Montage außerhalb des Getriebegehäuses zugänglich.

### Fig. 3:

Die Zwischenplatte 2 weist Befestigungspunkte 8 auf, welche sternförmig um die Rotationsachse 9 der hydraulischen Pumpe 1 angeordnet sind. An den Befestigungspunkten 8 sind die in dieser Figur nicht dargestellten Dämpfungselemente 5 befestigt. Die Zwischenplatte 2 weist Zentrierungen 10 auf, mit welchen die hydraulische Pumpe und der hydraulische Motor im Getriebegehäuse 7 zentriert werden können, um die exakte Position der hydraulischen Pumpe und des hydraulischen Motors zu gewährleisten. Ist die Zwischenplatte 2 über die Dämpfungselemente 5 mit dem Getriebegehäuse fest verbunden, werden die Zentrierelemente wieder entfernt, damit sich die hydraulische Pumpe und der hydraulische Motor wieder frei bewegen können. Somit ist eine einfache Montage gewährleistet.

### Fig. 4:

Eine hydraulische Pumpe 1 und ein hydraulischer Motor 3 sind über eine Zwischenplatte 2 miteinander verbunden, wobei die Zwischenplatte 2 über Dämpfungselemente 5 im Getriebegehäuse 7 elastisch befestigt ist. Die Antriebswelle 11 der hydraulischen Pumpe 1 ist über eine Welle 12 mit einem Zahnrad 13 verbunden, welches mit dem mechanischen Leistungszweig des Leistungsverzweigungsgetriebes in Verbindung steht. Die Welle 12 weist an ihren Enden ballige bzw. als Bogenverzahnung ausgeführte Verzahnungen 14 auf und ist über diese Verzahnungen 14 fliegend in dem Zahnrad 13 und der Antriebswelle 11 gelagert. Indem die Verzahnung 14 ballig ausgeführt und die Welle 12 fliegend gelagert ist, sind Bewegungen der hydraulischen Pumpe und des hydraulischen Motors möglich und werden nicht auf die Laufverzahnung des Zahnrades 13 übertragen, da zusätzlich das Zahnrad 13 über die Lagerung 15 fest im Getriebegehäuse 7 gelagert ist. Das Zahnrad 16, welches einerseits mit dem mechanischen Leistungszweig in Verbindung steht und andererseits über eine Welle 17 mit der Abtriebswelle 18 des hydraulischen Motors 3 verbunden ist, weist an seinen Verbindungsstellen ballige bzw. als Bogenverzahnung ausgeführte Verzahnungen 19 auf, wodurch sich der hydraulische Motor 3 und die hydraulische Pumpe 1 frei bewegen können und diese Bewegungen nicht auf das Zahnrad 16 übertragen werden, da zusätzlich das Zahnrad 16 über eine Lagerung 20 im Getriebegehäuse 7 gelagert ist. Somit ist gewährleistet, daß die Laufverzahnung des Zahnrades 16 nicht beeinflußt wird.

### Bezugszeichen

- 1: hydraulische Pumpe
- 2: Zwischenplatte
- 3: hydraulischer Motor
- 4: Aufnahmen
- 5: Dämpfungselemente
- 6: Verbindungselemente
- 7: Getriebegehäuse
- 8: Befestigungspunkte
- 9: Rotationsachse
- 10: Zentrierung
- 11: Antriebswelle
- 12: Welle
- 13: Zahnrad
- 14: Verzahnung
- 15: Lagerung
- 16: Zahnrad
- 17: Welle
- 18: Abtriebswelle
- 19: Verzahnung
- 20: Lagerung

## Patentansprüche

1. Leistungsverzweigungsgetriebe mit einem mechanischen und einem hydraulischen Leistungszweig, bei welchem im hydraulischen Leistungszweig eine hydraulische Pumpe (1) und ein hydraulischer Motor (3) miteinander verbunden und über elastische Dämpfungselemente (5) in einem Getriebegehäuse (7) gehaltert sind, und die hydraulische Pumpe (1) und der hydraulische Motor (3) nur in dem Bereich, in welchem sie miteinander verbunden sind, über Dämpfungselemente (5) mit einem Getriebegehäuse (7) verbunden sind, wobei die hydraulische Pumpe (1) und der hydraulische Motor (3) über Wellen (12, 17) mit dem mechanischen Leistungszweig in Verbindung stehen, welche fliegend gelagert sind, **dadurch gekennzeíchnet,** daß diese Wellen (12, 17) an den Verbindungsstellen (14, 19) ballige oder als Bogenverzahnung ausgeführte Verzahnungen aufweisen.

2. Leistungsverzweigungsgetriebe nach Anspruch 1, **dadurch gekennzeichnet, daß** Zahnräder (13, 16), welche über Wellen (12, 17) mit einer hydraulischen Pumpe (1) und einem hydraulischen Motor (3) verbunden sind, über Lagerungen (15, 20) in einem Getriebegehäuse (7) gelagert sind.

3. Leistungsverzweigungsgetriebe nach Anspruch 1, **dadurch gekennzeichnet, daß** der hydraulische Motor (3) über eine Zwischenplatte (2) mit der hydraulischen Pumpe (1) verbunden ist, welche Aufnahmen (4) für die Dämpfungselemente (5) aufweist.

4. Leistungsverzweigungsgetriebe nach Anspruch 3, **dadurch gekennzeichnet, daß** die Aufnahmen (4) für die Dämpfungselemente (5) sternförmig um eine Rotationsachse (9) der hydraulischen Pumpe (1) angeordnet sind.

5. Leistungsverzweigungsgetriebe nach Anspruch 1, **dadurch gekennzeichnet, daß** der hydraulische Motor (3) über eine Zwischenplatte (2) mit der hydraulischen Pumpe (1) verbunden ist, welche Zentrieraufnahmen (10) zur Zentrierung der Zwischenplatte (2) in einem Getriebegehäuse (7) aufweist.

6. Leistungsverzweigungsgetriebe nach Anspruch 1, **dadurch gekennzeichnet, daß** die Dämpfungselemente in einer Ebene angeordnet sind.

## Claims

1. Power distribution transmission with a mechanical and a hydraulic power transmission branch, in which a hydraulic pump (1) and a hydraulic motor (3) are connected together in the hydraulic power transmission branch and retained in a transmission housing (7) via elastic damping elements (5), and the hydraulic pump (1) and the hydraulic motor (3) are only connected to a transmission housing (7) via damping elements (5) in the region in which they are connected together, wherein the hydraulic pump (1) and the hydraulic motor (3) are connected to the mechanical power transmission branch via shafts (12, 17) which are mounted in a floating manner, **characterised in that** these shafts (12, 17) comprise crowned or spiral tooth systems at the connection points (14, 19).

2. Power distribution transmission according to Claim 1, **characterised in that** gear wheels (13, 16), which are connected to a hydraulic pump (1) and a hydraulic motor (3) via shafts (12, 17), are mounted in a transmission housing (7) via mountings (15, 20).

3. Power distribution transmission according to Claim 1, **characterised in that** the hydraulic motor (3) is connected to the hydraulic pump (1) via an intermediate plate (2), which comprises receptacles (4) for the damping elements (5).

4. Power distribution transmission according to Claim 3, **characterised in that** the receptacles (4) for the damping elements (5) are disposed in the shape of a star about the rotational axis (9) of the hydraulic pump (1).

5. Power distribution transmission according to Claim 1, **characterised in that** the hydraulic motor (3) is connected to the hydraulic pump (1) via an intermediate plate (2), which comprises centring receptacles (10) for centring the intermediate plate (2) in a transmission housing (7).

6. Power distribution transmission according to Claim 1, **characterised in that** the damping elements are disposed in one plane.

## Revendications

1. Transmission à ramification de puissance comprenant une branche de puissance mécanique et une branche de puissance hydraulique, dans laquelle, dans la branche de puissance hydraulique, une pompe hydraulique (1) et un moteur hydraulique (3) sont reliés l'un à l'autre et sont maintenus dans un carter de transmission (7) au moyen d'éléments amortisseurs élastiques (5), et la pompe hydraulique (1) et le moteur hydraulique (3) sont reliés à un carter de transmission (7) par l'intermédiaire d'éléments amortisseurs élastiques (5), uniquement dans la région dans laquelle ils sont reliés entre eux, la pompe hydraulique (1) et le moteur hydraulique (3) étant en liaison avec la branche de puissance mécanique par l'intermédiaire d'arbres (12, 17) qui sont montés flottants, **caractérisée en ce que** ces arbres (12, 17) comportent des dentures bombées en tonneau ou hypoïdes dans les zones de liaison (14, 19).

2. Transmission à ramification de puissance selon la revendication 1, **caractérisée en ce que** des roues dentées (13, 16) qui sont reliées à une pompe hydraulique (1) et à un moteur hydraulique (3) au moyen d'arbres (12, 17) sont montées rotatives dans un carter de transmission (7) par l'intermédiaire de paliers (15, 20).

3. Transmission à ramification de puissance selon la revendication 1, **caractérisée en ce que** le moteur hydraulique (3) est relié à la pompe hydraulique (1) par une plaque intermédiaire (2) qui comporte des logements (4) pour les éléments amortisseurs (5).

4. Transmission à ramification de puissance selon la revendication 3, **caractérisée en ce que** les logements (4) pour les éléments amortisseurs (5) sont disposés en étoile autour d'un axe de rotation (9) de la pompe hydraulique (1).

5. Transmission à ramification de puissance selon la revendication 1, **caractérisée en ce que** le moteur hydraulique (3) est relié à la pompe hydraulique (1) par une plaque intermédiaire (2) qui comporte des logements de centrage (10) pour assurer le centrage de la plaque intermédiaire (2) dans un carter de transmission (7).

6. Transmission à ramification de puissance selon la revendication 1, **caractérisée en ce que** les éléments amortisseurs sont disposés dans un même plan.
